# EUROPÄISCHE PATENTSCHRIFT

(11) **EP 3 598 549 B1**
(45) Veröffentlichungstag und Bekanntmachung des Hinweises auf die Patenterteilung: **08.06.2022**
(21) Anmeldenummer: 19186219.2
(22) Anmeldetag: 15.07.2019
(51) Int. Cl.: H01M 8/0247, H01M 8/0256, H01M 8/2465, H01M 8/04223, H01M 8/04858

(54) **BRENNSTOFFZELLE MIT SCHUTZ VOR LEERLAUFSPANNUNG**
FUEL CELL WITH PROTECTION AGAINST OFF-LOAD VOLTAGE
PILE À COMBUSTIBLE AVEC PROTECTION CONTRE LA TENSION EN CIRCUIT OUVERT

(30) Priorität: 18.07.2018 DE 102018211988
(43) Veröffentlichungstag der Anmeldung: 22.01.2020
(73) Patentinhaber: Siemens Mobility GmbH, 81739 München (DE)
(72) Erfinder: Peymandar, De-Niang Maria, 91468 Gutenstetten (DE)

(56) Entgegenhaltungen:
- DE-A1-102008 011 306
- JP-A- 2005 093 282
- JP-A- 2005 166 547
- US-A1- 2004 081 866
- US-A1- 2005 042 492

## Beschreibung

Die Erfindung betrifft eine Brennstoffzelle mit Schutz vor Leerlaufspannung, bei der mehrere Bipolarplatten und Membran-Elektrodeneinheiten in einer Stapelanordnung angeordnet sind. Eine Brennstoffzelle umfasst üblicherweise eine Reihenschaltung von mehreren Bipolarplatten und Membran-Elektrodeneinheiten (MEAs: Membran Electrode Assemblies). Wenn kein Stromverbraucher an die Brennstoffzelle angeschlossen ist, so befinden sich die Membran-Elektrodeneinheiten in der Leerlaufspannung, welche die Degradation der Membran-Elektrodeneinheiten erheblich fördert.

Um dieser sogenannten MEA-Degradation entgegenzuwirken, können beispielsweise externe Widerstände, die an jeder einzelner Bipolarplatte der Reihenschaltung angebracht sind, verwendet werden. Hierfür ist mindestens ein Bohrloch pro Bipolarplatte oder ein überstehendes Stück an der Bipolarplatte nötig, um die Widerstände zu befestigen. Da hochleistungsklassige Brennstoffzellen mehrere hundert von Bipolarplatten und Membran-Elektrodeneinheiten umfassen, ist die Anbringung der Widerstände in hoher Anzahl sehr zeitaufwendig, nur manuell machbar und mit einem hohen Risiko an Folgefehlern behaftet. Brennstoffzellen mit externen Widerständen sind aus den Offenlegungsschriften JP2005-166547, DE102008011306, JP2005-093282 und US2004/081866 bekannt.

Ein Anliegen der vorliegenden Erfindung ist es, eine Brennstoffzelle mit Schutz vor Leerlaufspannung anzugeben, die kostengünstig ohne großen Zeitaufwand herstellbar ist und dennoch zuverlässig vor einer Leerlaufspannung geschützt ist. Eine derartige Brennstoffzelle mit Schutz vor Leerlaufspannung ist im Patentanspruch 1 angegeben.

Die Brennstoffzelle mit Schutz vor Leerlaufspannung umfasst eine Stapelanordnung aus mehreren Bipolarplatten und mehreren Membran-Elektrodeneinheiten (MEAs), wobei eine jeweilige der Membran-Elektrodeneinheiten zwischen jeweils zwei der Bipolarplatten angeordnet ist. Des Weiteren weist die Brennstoffzelle ein elektrisches Widerstandselement auf. Das elektrische Widerstandselement ist mit jeder der Bipolarplatten elektrisch verbindbar.

Gemäß der vorgeschlagenen Ausführungsform einer Brennstoffzelle wird für die gesamte Stapelanordnung aus den Bipolarplatten und den Membran-Elektrodeneinheiten nur ein einziges elektrisches Widerstandselement benötigt, um die Brennstoffzelle und insbesondere die gegenüber einer Leerlaufspannung empfindlichen Membran-Elektrodeneinheiten sicher vor dem Auftreten der Leerlaufspannung zu schützen. Das elektrische Widerstandselement kann beispielsweise als ein Widerstandsdraht ausgebildet sein. Um die MEA-Degradation durch das Auftreten einer hohen Leerlaufspannung zu vermeiden, wird letztlich nur ein einziger Widerstandsdraht für die gesamte Stapelanordnung aus den Bipolarplatten und den Membran-Elektrodeneinheiten benötigt.

Während bisher hochleistungsstarke Brennstoffzellen aus mehreren Bipolarplatten und Membran-Elektrodeneinheiten einzeln mit Widerständen bestückt werden mussten und dementsprechend auch viele Widerstände notwendig waren, werden mit Hilfe der vorgeschlagenen Ausführungsform einer Brennstoffzelle alle Widerstände nur durch ein einziges elektrisches Widerstandselement, insbesondere durch nur einen Widerstandsdraht, ersetzt. Dies spart zum einen Materialkosten, zum anderen aber auch Personenkosten, da die Anbringung der Widerstände an die Bipolarplatten der Stapelanordnung bisher sehr zeitaufwendig war. Folgefehler wie beispielsweise das Nichtanbringen eines Widerstands durch menschliches Versagen und eine darauf folgende Degradation der Stapelanordnung können mit Hilfe der angegebenen Ausführungsform einer Brennstoffzelle verhindert werden.

Die Platten der Stapelanordnung, insbesondere die Bipolarplatten als auch die Abschlussplatten der Stapelanordnung, müssen nur geringfügig geändert werden, sodass eine Durchführung des elektrischen Widerstandselements, insbesondere des Widerstandsdrahts, möglich ist. Beispielsweise kann an jede der Bipolarplatten beziehungsweise Abschlussplatten eine kleine Lasche beziehungsweise ein an einer Seite der Platten hervorstehender Materialvorsprung, der als Kontaktierungseinrichtung mit einem Kontakierungsloch zur Einführung des Widerstandsdrahtes ausgebildet ist, angebracht sein.

Insgesamt ergeben sich mit der vorgeschlagenen Ausführungsform einer Brennstoffzelle Kostenersparnisse in der Produktion, Materialbeschaffung und Wartung, wobei gleichzeitig jedoch der Schutz der Membrane der Stapelanordnung bei einem Fehlerbetrieb der Brennstoffzelle sichergestellt ist.

Die Erfindung wird im Folgenden anhand von Figuren, die Ausführungsbeispiele der Brennstoffzelle mit Schutz vor Leerlaufspannung zeigen, näher erläutert.

Es zeigen:
Figur 1 eine schematische, zweidimensionale Ansicht einer Ausführungsform einer Stapelanordnung einer Brennstoffzelle mit Schutz vor Leerlaufspannung, und
Figur 2 eine perspektivische Ansicht einer Ausführungsform einer Stapelanordnung einer Brennstoffzelle mit Schutz vor Leerlaufspannung.

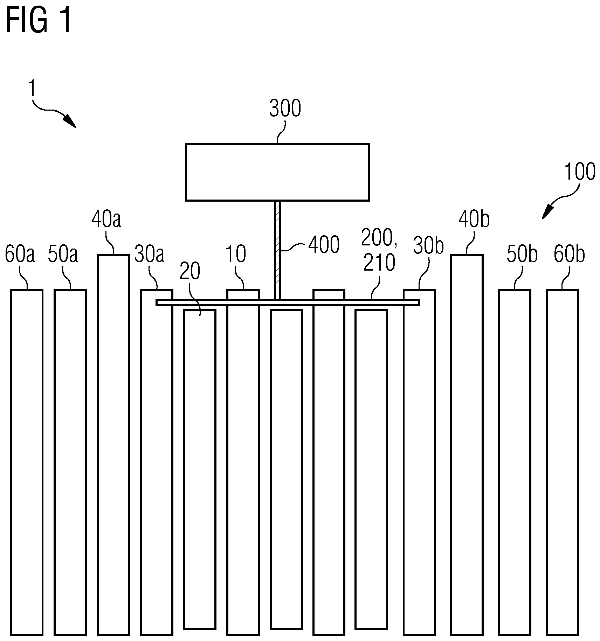

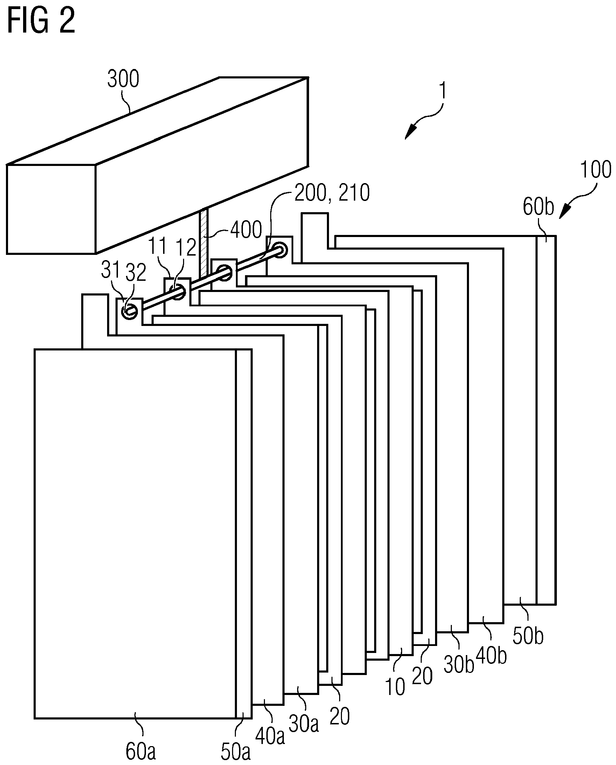

Die vorgeschlagene Ausführungsform für eine Brennstoffzelle mit Schutz vor Leerlaufspannung wird im Folgenden anhand der Figuren 1 und 2 näher erläutert. Die Brennstoffzelle 1 mit Schutz vor Leerlaufspannung umfasst eine Stapelanordnung 100 aus mehrere Bipolarplatten 10 und mehreren Membran-Elektrodeneinheiten 20 (MEAs). Jede der Membran-Elektrodeneinheiten 20 ist zwischen jeweils zwei der Bipolarplatten 10 angeordnet. Darüber hinaus weist die Brennstoffzelle 1 ein elektrisches Widerstandselement 200 auf, das mit jeder der Bipolarplatten 10 elektrisch verbindbar ist.

Die Stapelanordnung 100 umfasst des Weiteren eine Abschlussplatte 30a und eine Abschlussplatte 30b. Die mehreren Bipolarplatten 10 und die mehreren Membran-Elektrodeneinheiten 20 sind zwischen den beiden Abschlussplatten 30a und 30b angeordnet. Die Stapelanordnung aus den beiden Abschlussplatten 30a, 30b und den mehreren dazwischen angeordneten Bipolarplatten 10 und Membran-Elektrodeneinheiten 20 ist wiederum zwischen einem Stromabnehmer 40a und einem Stromabnehmer 40b angeordnet. Die Stapelanordnung 100 wird von Endplatten 60a und 60b abgeschlossen. Zwischen der Endplatte 60a und dem Stromabnehmer 40a befindet sich eine Isolationsplatte 50a. Auf der anderen Seite der Stapelanordnung ist ebenfalls zwischen der Endplatte 60b und dem Stromabnehmer 40b eine Isolationsplatte 50b angeordnet.

Wie in Figur 2 dargestellt ist, weist jede der Bipolarplatten 10 an einer Seite eine Kontaktierungseinrichtung 11 zum elektrischen Kontaktieren des elektrischen Widerstandselements 200 mit der jeweiligen Bipolarplatte 10 auf. Gemäß der Erfindung weist jede der Kontaktierungseinrichtungen 11 ein jeweiliges Kontaktierungsloch 12 auf. Das elektrische Widerstandselement 200 ist durch das jeweilige Kontaktierungsloch 12 der Kontaktierungseinrichtungen 11 hindurchgeführt.

Gemäß einer möglichen Ausführungsform umfasst die Brennstoffzelle eine Steuereinrichtung 300. Die Steuereinrichtung 300 steuert das elektrische Verbinden des elektrischen Widerstandselements 200 mit jeder der Kontaktierungseinrichtungen 11 der Bipolarplatten 10. Die Steuereinrichtung 300 ist dazu ausgebildet, das elektrische Widerstandselement 200 in einem Leerlaufbetrieb der Brennstoffzelle 1 mit jeder der Kontaktierungseinrichtungen 11 elektrisch zu verbinden. Darüber hinaus ist die Steuereinrichtung 300 dazu ausgebildet, das elektrische Widerstandselement 200 in einem Betriebszustand der Brennstoffzelle 1 außerhalb des Leerlaufbetriebs der Brennstoffzelle von jeder der Kontaktierungseinrichtungen 11 elektrisch zu trennen.

Gemäß einer möglichen Ausführungsform kann das elektrische Widerstandselement 200 als ein Widerstandsdraht 210 ausgebildet sein. Der Widerstandsdraht 210 ist durch das jeweilige Kontaktierungsloch 12 der Kontaktierungseinrichtungen 11 der Bipolarplatten 10 hindurchgeführt.

Gemäß einer möglichen Ausführungsform umfasst die Brennstoffzelle 1 einen Kontaktierungsarm 400 zum Bewegen des Widerstandsdrahts 210. Die Steuereinrichtung 300 ist insbesondere dazu ausgebildet, den Kontaktierungsarm 400 zu bewegen. Gemäß einer möglichen Ausführungsform der Brennstoffzelle 1 ist die Steuereinrichtung 300 dazu ausgebildet, den Kontaktierungsarm 400 derart zu bewegen, dass der Widerstandsdraht 210 die jeweilige Kontaktierungseinrichtung 11 der Bipolarplatten 10 kontaktiert, wenn die Brennstoffzelle 1 im Leerlaufbetrieb betrieben wird.

Darüber hinaus ist die Steuereinrichtung 300 dazu ausgebildet, den Kontaktierungsarm 400 derart zu bewegen, dass der Widerstandsdraht 210 berührungsfrei zu der jeweiligen Kontaktierungseinrichtung 11 der Bipolarplatten durch das jeweilige Kontaktierungsloch 12 der Kontaktierungseinrichtungen 11 der Bipolarplatten 10 hindurchgeführt ist, wenn die Brennstoffzelle 1 außerhalb des Leerlaufbetriebs betrieben wird.

Wie in den Figuren 1 und 2 dargestellt ist, weist die Abschlussplatte 30a und die Abschlussplatte 30b jeweils an einer Seite eine weitere Kontaktierungseinrichtung 31 zum elektrischen Kontaktieren des elektrischen Widerstandselements 200 mit den beiden Abschlussplatten 30a und 30b auf. Jede der weiteren Kontaktierungseinrichtungen 31 weist ein jeweiliges weiteres Kontaktierungsloch 32 auf. Das elektrische Widerstandselement 200 ist durch das jeweilige weitere Kontaktierungsloch 32 der weiteren Kontaktierungseinrichtungen 31 hindurchgeführt. Die Kontaktierungseinrichtung 31 kann als eine Lasche mit Kontaktierungsloch ausgebildet sein.

Gemäß einer möglichen Ausführungsform ist die Steuereinrichtung 300 dazu ausgebildet, den Kontaktierungsarm 400 derart zu bewegen, dass der Widerstandsdraht 210 die jeweilige weitere Kontaktierungseinrichtung 31 der beiden Abschlussplatten 30a und 30b kontaktiert, wenn die Brennstoffzelle 1 im Leerlaufbetrieb betrieben wird.

Die Steuereinrichtung 300 kann darüber hinaus dazu ausgebildet sein, den Kontaktierungsarm 400 derart zu bewegen, dass der Widerstandsdraht 210 berührungsfrei zu der jeweiligen weiteren Kontaktierungseinrichtung 31 der Abschlussplatten 30a und 30b durch das jeweilige weitere Kontaktierungsloch 32 der weiteren Kontaktierungseinrichtungen 31 der beiden Abschlussplatten 30a und 30b hindurchgeführt ist, wenn die Brennstoffzelle 1 außerhalb des Leerlaufbetriebs betrieben wird.

Gemäß der vorgeschlagenen Ausführungsform der Brennstoffzelle 1 wird anstelle einer Vielzahl von Widerständen, die jeder einzelnen Bipolarplatte beziehungsweise den Abschlussplatten zugeordnet sind und mit der jede einzelne Bipolar- beziehungsweise Abschlussplatte im Leerlauffall verbunden wird, nur ein einziges elektrisches Widerstandselement 200 beziehungsweise ein einziger Widerstandsdraht 210 verwendet. Das elektrische Widerstandselement 200 beziehungsweise der Widerstandsdraht 210 ist bei der vorgeschlagenen Ausführungsform der Brennstoffzelle 1 ein Teil der Stapelanordnung und kann insbesondere im Leerlauffall elektrisch mit den Bipolarplatten beziehungsweise den Abschlussplatten verbunden werden.

Um das elektrische Widerstandselement 200 beziehungsweise den elektrischen Widerstandsdraht 210 mit jeder der Bipolarplatten 10 beziehungsweise den beiden Abschlussplatten 30a und 30b zu verbinden, ist nur eine geringfügige Änderung des Plattendesigns der Stapelanordnung 100 notwendig. Wie in Figur 2 gezeigt ist, kann dazu beispielsweise an jeder Bipolarplatte 10 beziehungsweise an den beiden Abschlussplatten 30a und 30b ein Materialvorsprung in Form einer kleinen Lasche als Kontaktierungseinrichtung 11 beziehungsweise 31 mit einem Kontaktierungsloch 12 beziehungsweise 32 zur Einführung des Widerstandsdrahtes 210 angeordnet sein.

Im Normalbetrieb der Brennstoffzelle hat das elektrische Widerstandselement 200 beziehungsweise der Widerstandsdraht 210 keinen Kontakt zu den Bipolarplatten 10 beziehungsweise den Abschlussplatten 30a, 30b. Wenn allerdings eine Leerlaufspannung auftritt, wird mittels der Steuereinrichtung 300 ein elektrischer Kontakt zwischen dem elektrischen Widerstandselement 200 beziehungsweise dem Widerstandsdraht 210 und den Bipolarplatten 10 beziehungsweise den Abschlussplatten 30a und 30b hergestellt.

Das elektrische Widerstandselement 200 beziehungsweise der Widerstandsdraht 210 wird beispielsweise dann mit den Bipolarplatten 10 beziehungsweise den Abschlussplatten 30a und 30b elektrisch kontaktiert, wenn die Brennstoffzelle 1 gestartet beziehungsweise hochgefahren wird oder wenn die Brennstoffzelle ausgeschaltet beziehungsweise heruntergefahren wird. Darüber hinaus kann eine Leerlaufspannung, bei der das elektrische Widerstandselement 200 beziehungsweise der Widerstandsdraht 210 elektrisch mit den Bipolarplatten 10 beziehungsweise den Abschlussplatten 210 elektrisch verbunden wird, auch in einen Fehlerbetriebszustand der Brennstoffzelle 1 auftreten.

Gemäß einer alternativen Ausführungsform, welche von der vorliegenden Erfindung nicht umfasst ist, können die Bipolarplatten 10 beziehungsweise die Abschlussplatten 30a und 30b selbst mit Widerstandsschichten versehen werden. Die Bipolarplatten 10 werden üblicherweise innerhalb der Stapelanordnung 100 fest zusammengepresst, sodass die Platten im ständigen Kontakt zueinander stehen. Die Kontaktflächen können beispielsweise an einigen Stellen mit einem Material mit hohen Widerstandseigenschaften beschichtet werden. Die Beschichtung kann zum Beispiel mittels eines PVD (Physical Vapour Deposition)-Verfahrens erfolgen. Die Kontaktflächen der Platten, die aufgrund der Beschichtung einen hohen elektrischen Widerstand aufweisen, können das elektrische Widerstandselement 200 beziehungsweise den Widerstandsdraht 210 ersetzen.

Die Erfindung ist durch die oben angegebenen bevorzugten Ausführungsformen näher beschrieben. Es wird darauf hingewiesen, dass die Erfindung jedoch nicht auf diese Ausführungsbeispiele beschränkt ist, sondern ausschließlich von den Ansprüchen definiert ist.

### Bezugszeichenliste

- 1: Brennstoffzelle
- 10: Bipolarplatten
- 11: Kontaktierungseinrichtung
- 12: Kontaktierungsloch
- 20: Membran-Elektrodeneinheiten
- 30a, 30b: Abschlussplatten
- 31: weitere Kontaktierungseinrichtung
- 32: weiteres Kontaktierungsloch
- 40a, 40b: Stromabnehmer
- 50a, 50b: Isolationsplatte
- 60a, 60b: Endplatte
- 100: Stapelanordnung
- 200: Widerstandselement
- 210: Widerstandsdraht
- 300: Steuereinrichtung
- 400: Kontaktierungsarm

## Patentansprüche

1. Brennstoffzelle mit Schutz vor Leerlaufspannung, umfassend:
- eine Stapelanordnung (100) aus mehreren Bipolarplatten (10) und mehreren Membran-Elektrodeneinheiten (20), wobei eine jeweilige der Membran-Elektrodeneinheiten (20) zwischen jeweils zwei der Bipolarplatten (10) angeordnet ist,
- ein elektrisches Widerstandselement (200),
- wobei das elektrische Widerstandselement (200) mit jeder der Bipolarplatten (10) elektrisch verbindbar ist,
- wobei jede der Bipolarplatten (10) an einer Seite eine Kontaktierungseinrichtung (11) zum elektrischen Kontaktieren des elektrischen Widerstandselements (200) mit der jeweiligen Bipolarplatte (10) aufweist, dadurch charakterisiert dass:
- jede der Kontaktierungseinrichtungen (11) ein jeweiliges Kontaktierungsloch (12) aufweist,
- wobei das elektrische Widerstandselement (200) durch das jeweilige Kontaktierungsloch (12) der Kontaktierungseinrichtungen (11) hindurchgeführt ist.

2. Brennstoffzelle nach Anspruch 1 , umfassend:
- eine Steuereinrichtung (300) zum Steuern des elektrischen Verbindens des elektrischen Widerstandselements (200) mit jeder der Kontaktierungseinrichtungen (11),
- wobei die Steuereinrichtung (300) dazu ausgebildet ist, das elektrische Widerstandselement (200) in einem Leerlaufbetrieb der Brennstoffzelle (1) mit jeder der Kontaktierungseinrichtungen (11) elektrisch zu verbinden.

3. Brennstoffzelle nach Anspruch 2, wobei die Steuereinrichtung (300) dazu ausgebildet ist, das elektrische Widerstandselement (200) in einem Betriebszustand der Brennstoffzelle (1) außerhalb des Leerlaufbetriebs der Brennstoffzelle von jeder der Kontaktierungseinrichtungen (11) elektrisch zu trennen.

4. Brennstoffzelle nach einem der Ansprüche 1 bis 3, wobei das elektrische Widerstandselement (200) als ein Widerstandsdraht (210) ausgebildet ist.

5. Brennstoffzelle nach Anspruch 4, wobei der Widerstandsdraht (210) durch das jeweilige Kontaktierungsloch (12) der Kontaktierungseinrichtungen (11) hindurchgeführt ist.

6. Brennstoffzelle nach Anspruch 5 in Kombination mit Anspruch 2, umfassend:
- einen Kontaktierungsarm (400) zum Bewegen des Widerstandsdrahts (210),
- wobei die Steuereinrichtung (300) dazu ausgebildet ist, den Kontaktierungsarm (400) zu bewegen.

7. Brennstoffzelle nach Anspruch 6,
- wobei die Steuereinrichtung (300) dazu ausgebildet ist, den Kontaktierungsarm (400) derart zu bewegen, dass der Widerstandsdraht (210) die jeweilige Kontaktierungseinrichtung (11) der Bipolarplatten (10) kontaktiert, wenn die Brennstoffzelle (1) im Leerlaufbetrieb betrieben wird,
- wobei die Steuereinrichtung (300) dazu ausgebildet ist, den Kontaktierungsarm (400) derart zu bewegen, dass der Widerstandsdraht (210) berührungsfrei zu der jeweiligen Kontaktierungseinrichtung (11) der Bipolarplatten (10) durch das jeweilige Kontaktierungsloch (12) der Kontaktierungseinrichtungen (11) der Bipolarplatten (10) hindurchgeführt ist, wenn die Brennstoffzelle (1) außerhalb des Leerlaufbetriebs betrieben wird.

8. Brennstoffzelle nach einem der Ansprüche 1 bis 7,
- wobei die Stapelanordnung (100) eine erste und eine zweite Abschlussplatte (30a, 30b) aufweist und die mehreren Bipolarplatten (10) und die mehreren Membran-Elektrodeneinheiten (20) zwischen der ersten und zweiten Abschlussplatte (30a, 30b) angeordnet sind,
- wobei die erste und die zweite Abschlussplatte (30a, 30b) jeweils an einer Seite eine weitere Kontaktierungseinrichtung (31) zum elektrischen Kontaktieren des elektrischen Widerstandselements (200) mit der ersten und zweiten Abschlussplatte (30a, 30b) aufweisen.

9. Brennstoffzelle nach Anspruch 8,
- wobei jede der weiteren Kontaktierungseinrichtungen (31) ein jeweiliges weiteres Kontaktierungsloch (32) aufweist,
- wobei das elektrische Widerstandselement (200) durch das jeweilige weitere Kontaktierungsloch (32) der weiteren Kontaktierungseinrichtungen (31) hindurchgeführt ist.

10. Brennstoffzelle nach Anspruch 9 in Kombination mit Anspruch 6,
- wobei die Steuereinrichtung (300) dazu ausgebildet ist, den Kontaktierungsarm (400) derart zu bewegen, dass der Widerstandsdraht (210) die jeweilige weitere Kontaktierungseinrichtung (31) der ersten und zweiten Abschlussplatte (30a, 30b) kontaktiert, wenn die Brennstoffzelle (1) im Leerlaufbetrieb betrieben wird,
- wobei die Steuereinrichtung (300) dazu ausgebildet ist, den Kontaktierungsarm (400) derart zu bewegen, dass der Widerstandsdraht (210) berührungsfrei zu der jeweiligen weiteren Kontaktierungseinrichtung (31) der ersten und zweiten Abschlussplatte (30a, 30b) durch das jeweilige weitere Kontaktierungsloch (32) der weiteren Kontaktierungseinrichtungen (31) der ersten und zweiten Abschlussplatte (30a, 30b) hindurchgeführt ist, wenn die Brennstoffzelle (1) außerhalb des Leerlaufbetriebs betrieben wird.

## Claims

1. Fuel cell with protection against off-load voltage, comprising:
- a stack arrangement (100) made from a number of bipolar plates (10) and a number of membrane electrode units (20), wherein one particular membrane electrode unit (20) is arranged between two of the bipolar pates (10) in each case,
- an electrical resistor element (200),
- wherein the electrical resistor element (200) can be connected electrically to each of the bipolar plates (10),
- wherein on one side each of the bipolar plates (10) has a contacting device (11) for electrically contacting the electrical resistor element (200) with the respective bipolar plate (10), **characterised in that**
- each of the contacting devices (11) has a respective contacting hole (12),
- wherein the electrical resistor element (200) is passed through the respective contacting hole (12) of the contacting devices (11).

2. Fuel cell according to claim 1, comprising:
- a control device (300) for controlling the electrical connection of the electrical resistor element (200) with each of the contacting devices (11),
- wherein the control device (300) is embodied to electrically connect the electrical resistor element (200) in an off-load operation of the fuel cell (1) to each of the contacting devices (11).

3. Fuel cell according to claim 2,
wherein the control device (300) is embodied to electrically separate the electrical resistor element (200) in an operating state of the fuel cell (1) outside of the off-load operation of the fuel cell from each of the contacting devices (11).

4. Fuel cell according to one of claims 1 to 3, wherein the electrical resistor element (200) is embodied as a resistance wire (210).

5. Fuel cell according to claim 4,
wherein the resistance wire (210) is passed through the respective contacting hole (12) of the contacting devices (11) .

6. Fuel cell according to claim 5 in combination with claim 2, comprising:
- a contacting arm (400) for moving the resistance wire (210),
- wherein the control device (300) is embodied to move the contacting arm (400).

7. Fuel cell according to claim 6,
- wherein the control device (300) is embodied to move the contacting arm (400) so that the resistance wire (210) contacts the respective contacting device (11) of the bipolar plates (10) when the fuel cell (1) is operated in off-load operation,
- wherein the control device (300) is embodied to move the contacting arm (400) so that the resistance wire (210) is passed through the respective contacting hole (12) of the contacting devices (11) of the bipolar plates (10) in a contact free manner with respect to the particular contacting device (11) of the bipolar plates (10), when the fuel cell (1) is operated outside of the off-load operation.

8. Fuel cell according to one of claims 1 to 7,
- wherein the stack arrangement (100) has a first and a second end plate (30a, 30b) and the number of bipolar plates (10) and the number of membrane electrode units (20) are arranged between the first and second end plate (30a, 30b),
- wherein on one side the first and the second end plate (30a, 30b) have in each case a further contacting device (31) for electrically contacting the electrical resistance element (200) with the first and second end plate (30a, 30b).

9. Fuel cell according to claim 8,
- wherein each of the further contacting devices (31) has a respective further contacting hole (32),
- wherein the electrical resistor element (200) is passed through the respective further contacting hole (32) of the further contacting devices (31).

10. Fuel cell according to claim 9 in combination with claim 6,
- wherein the control device (300) is embodied to move the contacting arm (400) such that the resistance wire (210) contacts the respective further contacting device (31) of the first and second end plate (30a, 30) when the fuel cell (1) is operated in off-load operation,
- wherein the control device (300) is embodied to move the contacting arm (400) such that the resistance wire (210) is passed through the respective further contacting hole (32) of the further contact devices (31) of the first and second end plate (30a, 30b) in a contact-free manner with respect to the particular further contacting device (31) of the first and second end plate (30a, 30b) when the fuel cell (1) is operated outside of the off-load operation.

## Revendications

1. Pile à combustible à protection vis-à-vis de la tension en circuit ouvert, comprenant :
- un empilement (100) de plusieurs plaques (10) bipolaires et de plusieurs unités (20) de membrane - électrode, l'une respective des unités (20) de membrane - électrode étant disposée entre respectivement deux des plaques (10) bipolaires,
- un élément (200) de résistance électrique,
- dans laquelle l'élément (200) de résistance électrique peut être connecté électriquement à chacune des plaques (10) bipolaires,
- dans laquelle chacune des plaques (10) bipolaires a, d'un côté un dispositif (11) de mise en contact pour la mise en contact électrique de l'élément (200) de résistance électrique avec la plaque (10) bipolaire respective, **caractérisée en ce que** :
- chacun des dispositifs (11) de mise en contact a un trou (12) respectif de mise en contact,
- dans laquelle l'élément (200) de résistance électrique passe dans le trou (12) respectif de mise en contact des dispositifs (11) de mise en contact.

2. Pile à combustible suivant la revendication 1, comprenant :
- un dispositif (300) de commande pour commander la connexion électrique de l'élément (200) de résistance électrique à chacun des dispositifs (11) de mise en contact,
- dans laquelle le dispositif (300) de commande est constitué pour connecter électriquement l'élément (200) de résistance électrique, dans un fonctionnement en circuit ouvert de la pile (1) à combustible, à chacun des dispositifs (11) de mise en contact.

3. Pile à combustible suivant la revendication 2, dans laquelle le dispositif (300) de commande est constitué de manière à séparer électriquement l'élément (200) de résistance électrique de chacun des dispositifs (11) de mise en contact dans un état de fonctionnement de la pile (1) à combustible, en dehors du fonctionnement en circuit ouvert de la pile à combustible.

4. Pile à combustible suivant l'une des revendications 1 à 3, dans laquelle l'élément (200) de résistance électrique est constitué sous la forme d'un fil (210) de résistance.

5. Pile à combustible suivant la revendication 4, dans laquelle le fil (210) de résistance passe dans le trou (12) respectif de mise en contact des dispositifs (11) de mise en contact.

6. Pile à combustible suivant la revendication 5 en combinaison avec la revendication 2, comprenant :
- un bras (400) de mise en contact pour le déplacement du fil (210) de résistance,
- dans lequel le dispositif (300) de commande est constitué pour déplacer le bras (400) de mise en contact.

7. Pile à combustible suivant la revendication 6,
- dans laquelle le dispositif (300) de commande est constitué pour déplacer le bras (400) de mise en contact, de manière à ce que le fil (210) de résistance entre en contact avec le dispositif (11) respectif de mise en contact des plaques (10) bipolaire, si la pile (1) à combustible est en fonctionnement en circuit ouvert,
- dans laquelle le dispositif (300) de commande est constitué pour déplacer le bras (400) de mise en contact, de manière à ce que le fil (210) de résistance passe, sans toucher par rapport au dispositif (11) respectif de mise en contact des plaques (10) bipolaires dans le trou (12) respectif de mise en contact des dispositifs (11) de mise en contact des plaques (10) bipolaires, si la pile (1) à combustible est en dehors du fonctionnement en circuit ouvert.

8. Pile à combustible suivant l'une des revendications 1 à 7,
- dans laquelle l'empilement (100) a une première et une deuxième plaques (30a, 30b) de terminaison et les plusieurs plaques (10) bipolaires et les plusieurs unités (20) de membrane - électrode sont disposées entre la première et la deuxième plaques (30a, 30b) de terminaison,
- dans laquelle la première et la deuxième plaque (30a, 30b) de terminaison ont chacune sur une face un autre dispositif (31) de mise en contact pour la mise en contact électrique de l'élément (200) de résistance électrique avec la première et la deuxième plaques (30a, 30b) de terminaison.

9. Pile à combustible suivant la revendication 8,
- dans laquelle chacun des autres dispositifs (31) de mise en contact a un autre trou (32) respectif de mise en contact,
- dans laquelle l'élément (200) de résistance électrique passe dans l'autre trou (32) respectif de mise en contact des autres dispositifs (31) de mise en contact.

10. Pile à combustible suivant la revendication 9 en combinaison avec la revendication 6,
- dans laquelle le dispositif (300) de commande est constitué pour déplacer le bras (400) de mise en contact, de manière à ce que le fil (210) de résistance entre en contact avec l'autre dispositif (31) respectif de mise en contact de la première et de la deuxième plaques (30a, 30b) de terminaison, si la pile (1) à combustible est en fonctionnement en circuit ouvert,
- dans laquelle le dispositif (300) de commande est constitué pour déplacer le bras (400) de mise en contact, de manière à ce que le fil (210) de résistance passe, sans toucher par rapport à l'autre dispositif (31) respectif de mise en contact de la première et la deuxième plaques (30a, 30b) de terminaison, dans l'autre trou (32) respectif de mise en contact des autres dispositifs (31) de mise en contact de la première et la deuxième plaques (30a, 30b) de terminaison, si la pile (1) à combustible est en fonctionnement en dehors du fonctionnement en circuit ouvert.
